# FASCICULE DE BREVET EUROPEEN

(11) **EP 3 372 892 B1**
(45) Date de publication et mention de la délivrance du brevet: **01.04.2020**
(21) Numéro de dépôt: 18156900.5
(22) Date de dépôt: 15.02.2018
(51) Int. Cl.: F21S 43/27, F21V 8/00, F21S 43/239, F21Y 107/90, F21Y 115/10

(54) **DISPOSITIF D'ÉCLAIRAGE À POSITIONNEMENTS SIMPLIFIÉS ET PRÉCIS DES SOURCES DE LUMIÈRE ET GUIDES DE LUMIÈRE**
BELEUCHTUNGSVORRICHTUNG MIT VEREINFACHTER UND PRÄZISER POSITIONIERUNG DER LEUCHTQUELLEN UND LICHTWELLENLEITER
LIGHTING DEVICE WITH SIMPLIFIED AND ACCURATE POSITIONING OF THE LIGHT SOURCES AND LIGHT GUIDES

(30) Priorité: 07.03.2017 FR 1751816
(43) Date de publication de la demande: 12.09.2018
(73) Titulaire: PSA Automobiles SA, 78300 Poissy (FR)
(72) Inventeur: PERON, RODOLPHE, 95220 HERBLAY (FR)

(56) Documents cités:
- EP-A2- 2 407 709
- EP-A2- 2 450 622
- WO-A1-2012/059852
- DE-U1-202016 002 436

## Description

L'invention concerne les dispositifs d'éclairage, et plus précisément ceux qui comprennent au moins des première et seconde sources de lumière associées respectivement à des premier et second guides de lumière propres à assurer respectivement des première et seconde fonctions photométriques prédéfinies.

Dans ce qui suit, on entend par « fonction photométrique » aussi bien une fonction photométrique d'éclairage, qu'une fonction photométrique de signalisation ou qu'une fonction photométrique d'effet lumineux, éventuellement décoratif.

Dans certains domaines, comme par exemple celui des véhicules, éventuellement de type automobile, on utilise des dispositifs d'éclairage, tels que ceux définis ci-dessus, pour assurer au moins deux fonctions photométriques prédéfinies, choisies, par exemple, parmi une fonction de feu de stop, une fonction d'indicateur de changement de direction, une fonction de feu de position (ou veilleuse ou encore lanterne), ou une fonction de feu de jour (ou DRL (pour « Daytime running Light (or Lamp) » - signalisation lumineuse allumée automatiquement lorsque le véhicule est mis en fonctionnement pendant le jour)).

Dans ces dispositifs d'éclairage, chaque source de lumière est généralement solidarisée à une carte à circuits imprimés, par exemple de type PCB (« Printed Circuit Board »), qui doit être très précisément positionnée par rapport à la zone d'entrée du guide de lumière associé par laquelle pénètrent les photons, afin que ce dernier puisse assurer correctement sa fonction photométrique, tant sur les plans de l'intensité et de la divergence que sur le plan de l'homogénéité. Ces positionnements très précis s'avèrent compliqués à obtenir dans un espace exigu du fait que chaque guide de lumière et la carte à circuits imprimés associée sont installés séparément et présentent des tolérances dimensionnelles respectives, inhérentes à leurs modes de fabrication.

Ces positionnements très précis s'avèrent encore plus compliqués, voire quasiment impossibles, lorsque les première et seconde sources de lumière doivent être solidarisées à deux faces opposées d'une même carte à circuits imprimés pour une raison d'encombrement et/ou une raison de poids et/ou une raison de coût. Les documents EP 2 407 709 A2, EP 2 450 622 A2 et DE20 2016 002 436 U1 divulguent des dispositifs d'éclairage de l'art antérieur.

L'invention a donc notamment pour but d'améliorer la situation.

Elle propose notamment à cet effet un dispositif d'éclairage comprenant des première et seconde sources de lumière propres à générer des photons, des premier et second guides de lumière propres à assurer respectivement des première et seconde fonctions photométriques prédéfinies à partir des photons générés par les première et seconde sources de lumière.

Ce dispositif d'éclairage se caractérise par le fait :
- que ses premier et second guides de lumière comprennent respectivement des premier et deuxième groupes d'au moins un trou, et
- qu'il comprend également, d'une part, une carte à circuits imprimés comportant des première et seconde faces auxquelles sont respectivement solidarisées les première et seconde sources de lumière et munie d'un troisième groupe d'au moins un trou, et, d'autre part, une pièce de support comprenant une face munie d'au moins un mât traversant respectivement des trous des premier et troisième groupes, dans cet ordre, afin de positionner respectivement les premier guide de lumière et carte à circuits imprimés à des premier et deuxième niveaux prédéfinis, et comprenant une extrémité libre coiffée par le second guide de lumière au niveau d'un trou correspondant afin de le positionner à un troisième niveau prédéfini.

Grâce à l'utilisation de cette pièce de support munie d'au moins un mât, il est désormais possible de positionner précisément tous les éléments par rapport à elle, si bien qu'elle constitue une référence qui permet de minimiser toutes les dispersions de positionnement des guides de lumière par rapport aux sources de lumière qui leurs sont associées respectivement.

Le dispositif d'éclairage selon l'invention peut comporter d'autres caractéristiques qui peuvent être prises séparément ou en combinaison, et notamment :
- chaque groupe peut comprendre deux trous, et la face de la pièce de support peut comprendre des premier et second mâts ;
   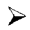 les premier et second mâts peuvent présenter chacun une section de forme générale carrée. Dans ce cas, un premier trou de chaque groupe présente une forme générale carrée homologue de la forme de la section du premier mât ;
   - un second trou de chaque groupe peut présenter une forme générale rectangulaire ou oblongue adaptée à la forme de la section du second mât correspondant ;
- la face de la pièce de support peut comprendre autour de chaque mât au moins une protubérance comprenant une surface d'appui contre laquelle s'appuie le premier guide de lumière lorsqu'il est dans son premier niveau prédéfini ;
- il peut également comprendre un premier masque, d'une part, intercalé entre le premier guide de lumière et la carte à circuits imprimés afin d'isoler l'une de l'autre les première et seconde fonctions photométriques, et, d'autre part, comprenant une ouverture placée devant la première source de lumière afin que les photons générés par cette dernière alimentent le premier guide de lumière, et un quatrième groupe d'au moins un trou traversé par le mât correspondant ;
- chaque mât peut comprendre un logement interne débouchant au niveau de son extrémité libre et muni d'un filetage interne sur lequel est vissée une vis ayant une tête plaquée contre une face du second guide de lumière, opposée à la carte à circuits imprimés ;
- les première et seconde fonctions photométriques peuvent être choisies parmi une fonction d'indicateur de changement de direction (ou clignotant), une fonction de feu de stop, une fonction de feu de jour (ou DRL) et une fonction de feu de position (ou veilleuse ou encore lanterne).

L'invention propose également un bloc optique de véhicule, éventuellement de type automobile, et comprenant au moins un dispositif d'éclairage du type de celui présenté ci-avant.

L'invention propose également un véhicule, éventuellement de type automobile, et comprenant au moins un dispositif d'éclairage du type de celui présenté ci-avant et/ou au moins un bloc optique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe longitudinale (XZ), un exemple de bloc optique comprenant un exemple de réalisation d'un dispositif d'éclairage selon l'invention,
- la figure 2 illustre schématiquement, dans une vue en perspective, un exemple de réalisation d'une pièce de support d'un dispositif d'éclairage selon l'invention,
- la figure 3 illustre schématiquement, dans une vue en perspective, un exemple de réalisation d'un premier mât de la pièce de support de la figure 2,
- la figure 4 illustre schématiquement, dans une vue en perspective, un exemple de réalisation d'un premier guide de lumière d'un dispositif d'éclairage selon l'invention,
- la figure 5 illustre schématiquement, dans une vue perspective et partiellement en coupe transversale (YZ), une partie des principaux éléments constituant le dispositif d'éclairage de la figure 1, pendant une phase d'assemblage,
- la figure 6 illustre schématiquement, dans une vue en coupe transversale (YZ), les principaux éléments constituant le dispositif d'éclairage de la figure 5 avec en complément un premier masque, une fois la phase d'assemblage terminée.

L'invention a notamment pour but de proposer un dispositif d'éclairage DE comprenant au moins des première S1 et seconde S2 sources de lumière faisant partie d'une même carte à circuits imprimés CC et associées respectivement à des premier GL1 et second GL2 guides de lumière propres à assurer respectivement des première et seconde fonctions photométriques prédéfinies.

On considère dans ce qui suit, à titre d'exemple non limitatif, que le dispositif d'éclairage DE est destiné à équiper un bloc optique BO d'un véhicule de type automobile, comme par exemple une voiture. Mais l'invention n'est pas limitée à cette application. En effet, un dispositif d'éclairage DE peut être un équipement en soi (comportant éventuellement son propre boîtier), ou bien peut faire partie d'un autre équipement qu'un bloc optique de véhicule. Ainsi, un dispositif d'éclairage DE peut faire partie de n'importe quel véhicule (terrestre, maritime (ou fluvial), ou aérien), de n'importe quelle installation, y compris de type industriel, de n'importe quel appareil (ou système), et de n'importe quel bâtiment.

Par ailleurs, on considère dans ce qui suit, à titre d'exemple non limitatif, que le bloc optique BO (comprenant au moins un dispositif d'éclairage DE) est un feu arrière assurant au moins deux fonctions photométriques de signalisation, comme par exemple une fonction de feu de stop et une fonction d'indicateur de changement de direction (ou clignotant). Mais l'invention n'est pas limitée à cette application. En effet, le dispositif d'éclairage DE, selon l'invention, est un dispositif lumineux pouvant assurer au moins deux fonctions photométriques d'éclairage ou de signalisation ou d'effet lumineux, éventuellement décoratif. Ainsi, il peut assurer au moins deux fonctions photométriques de signalisation choisies chacune parmi une fonction d'indicateur de changement de direction, une fonction de feu de stop, une fonction de feu de jour (ou DRL), et une fonction de feu de position (ou veilleuse ou encore lanterne).

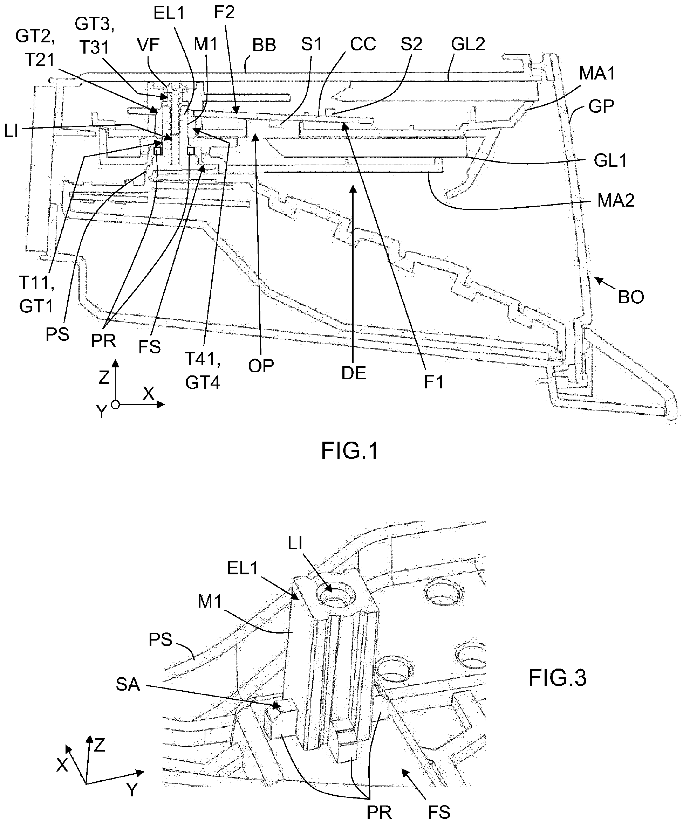

Sur les figures 1 à 6, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur la figure 1, une partie d'un bloc optique BO de véhicule (ici un feu arrière) comprenant, notamment, un boîtier BB, délimitant une partie d'une cavité logeant un dispositif d'éclairage DE selon l'invention, et une glace de protection GP, en verre ou en matière plastique.

Le boîtier BB est destiné, ici, à être solidarisé à une partie de la carrosserie d'un véhicule (ici dans une partie arrière). Il est réalisé dans un matériau rigide, comme par exemple une matière plastique ou synthétique. Dans ce cas, il peut être réalisé par moulage.

Comme illustré sur les figures 1, 5 et 6, un dispositif d'éclairage DE, selon l'invention, comprend au moins des première S1 et seconde S2 sources de lumière, au moins des premier GL1 et second GL2 guides de lumière, au moins une carte à circuits imprimés CC, et une pièce de support PS.

La carte à circuits imprimés CC comprend des première F1 et seconde F2 faces opposées l'une à l'autre et auxquelles sont respectivement solidarisées les première S1 et seconde S2 sources de lumière. Elle peut, par exemple, être de type PCB (« Printed Circuit Board »), rigide ou flexible (« de type « Flex »).

La première source de lumière S1 est propre à générer des photons à destination d'une zone d'entrée du premier guide de lumière GL1.

La seconde source de lumière S2 est propre à générer des photons à destination d'une zone d'entrée du second guide de lumière GL2.

Chacune des première S1 et seconde S2 sources de lumière peut, par exemple, comprendre au moins une diode électroluminescente, de type classique (ou LED (« Light-Emitting Diode »)) ou de type organique (ou OLED (« Organic Light-Emitting Diode »)), ou bien une diode laser. Dans l'exemple illustré non limitativement, chacune des première S1 et seconde S2 sources de lumière comprend plusieurs diodes électroluminescentes, par exemple une dizaine ou une vingtaine.

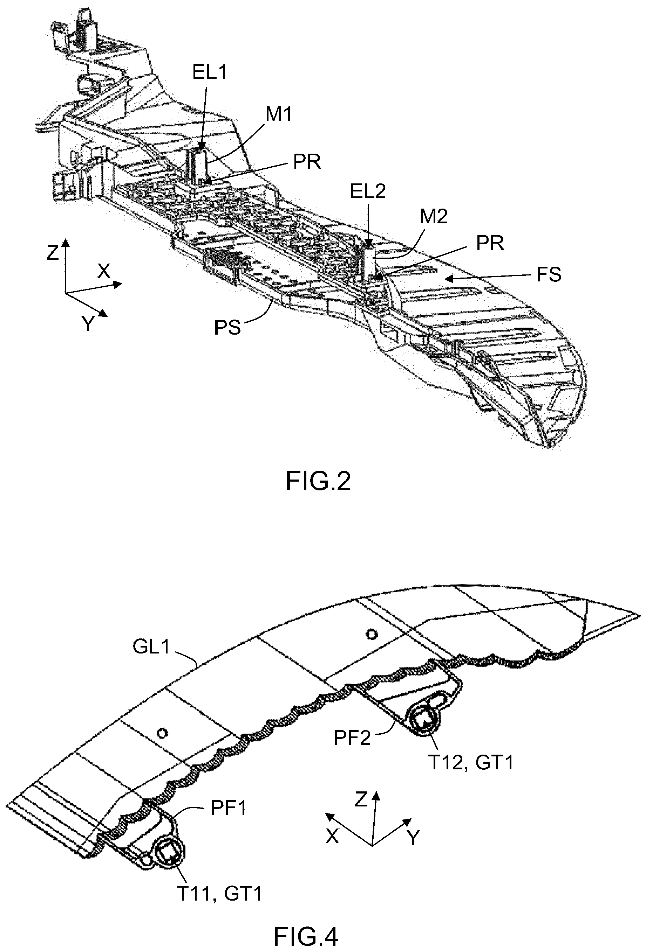

Le premier guide de lumière GL1 (j = 1) est propre à assurer une première fonction photométrique prédéfinie à partir des photons qui sont générés par la première source de lumière S1, et qu'il reçoit sur une zone d'entrée. A titre d'exemple non limitatif, le premier guide de lumière GL1 peut assurer une fonction de feu de stop. Un exemple non limitatif de premier guide de lumière GL1 est illustré sur la figure 4.

Ce premier guide de lumière GL1 comprend un premier groupe GT1 (j = 1) d'au moins un trou T1k traversant dont on comprendra l'utilité plus loin.

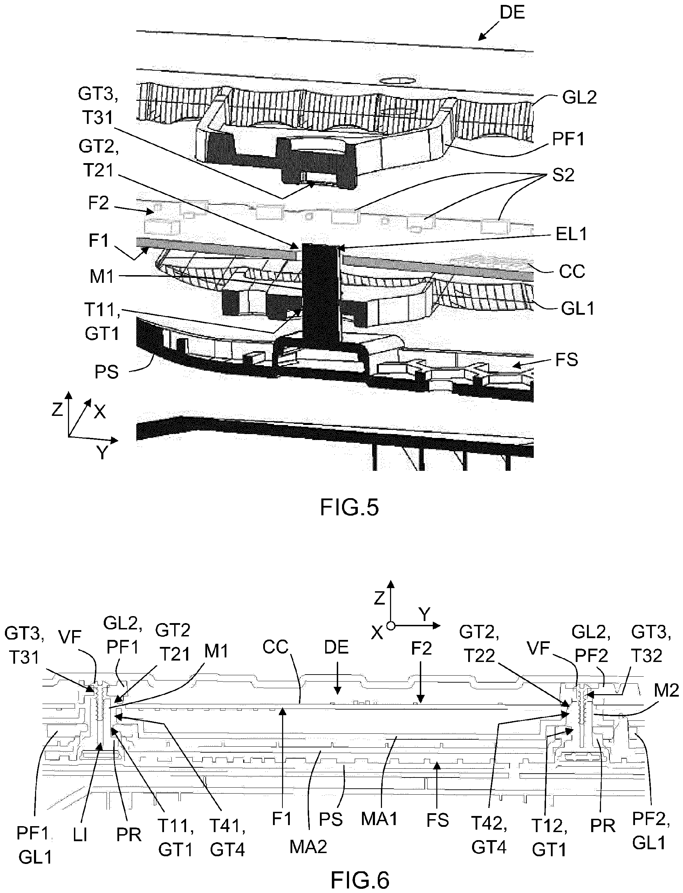

On notera que dans l'exemple illustré non limitativement sur les figures 4 et 6, le premier guide de lumière GL1 comprend un premier groupe GT1 comportant un premier trou T11 (k = 1) traversant et un second trou T12 (k = 2) traversant. Par ailleurs, dans l'exemple illustré non limitativement sur les figures 4 et 6, les premier T11 et second T12 trous du premier groupe GT1 sont respectivement définis dans des première PF1 et seconde PF2 pattes de fixation du premier guide de lumière GL1, destinées à les déporter dans une partie qui n'est pas concernée par le guidage des photons. Mais, ce premier guide de lumière GL1 pourrait ne pas comporter de patte de fixation.

Le second guide de lumière GL2 (j = 2) est propre à assurer une seconde fonction photométrique prédéfinie à partir des photons qui sont générés par la seconde source de lumière S2, et qu'il reçoit sur une zone d'entrée. A titre d'exemple non limitatif, le second guide de lumière GL2 peut assurer une fonction d'indicateur de changement de direction.

Ce second guide de lumière GL2 comprend un deuxième groupe GT2 (j = 2) d'au moins un trou T2k traversant dont on comprendra l'utilité plus loin.

On notera que dans l'exemple illustré non limitativement sur la figure 6, le second guide de lumière GL2 comprend un deuxième groupe GT2 comportant un premier trou T21 (k = 1) traversant et un second trou T22 (k = 2) traversant. Par ailleurs, dans l'exemple illustré non limitativement sur la figure 6, les premier T21 et second T22 trous du deuxième groupe GT2 sont respectivement définis dans des première PF1 et seconde PF2 pattes de fixation du second guide de lumière GL2, destinées à les déporter dans une partie qui n'est pas concernée par le guidage des photons. Mais, ce second guide de lumière GL2 pourrait ne pas comporter de patte de fixation.

Chacun des premier GL1 et second GL2 guides de lumière peut, par exemple, être de type plat (ou « flat guide »). Par exemple, chacun des premier GL1 et second GL2 guides de lumière peut être réalisé en polycarbonate (ou PC) ou en poly-méthacrylate de méthyle (ou PMMA).

La carte à circuits imprimés CC est également munie d'un troisième groupe GT3 (j = 3) d'au moins un trou T3k traversant dont on comprendra l'utilité plus loin.

On notera que dans l'exemple illustré non limitativement sur la figure 6, la carte à circuits imprimés CC comprend un troisième groupe GT3 comportant un premier trou T31 (k = 1) traversant et un second trou T32 (k = 2) traversant.

La pièce de support PS comprend une face FS, orientée vers le premier guide de lumière GL1, et munie d'au moins un mât Mk traversant respectivement des trous Tjk des premier GT1 et troisième GT3 groupes, dans cet ordre, afin de positionner respectivement le premier guide de lumière GL1 et la carte à circuits imprimés CC à des premier et deuxième niveaux prédéfinis. De plus, chaque mât Mk comprend une extrémité libre ELk qui est coiffée par le second guide de lumière GL2 au niveau d'un trou T2k correspondant afin de le positionner à un troisième niveau prédéfini. Un exemple non limitatif de pièce de support PS est illustré sur la figure 2.

Ainsi, les premier GL1 et second GL2 guides de lumière et la carte à circuits imprimés CC (avec ses sources de lumière S1 et S2) sont positionnés par rapport à chaque mât Mk de la pièce de support PS à des niveaux prédéfinis. La pièce de support PS constitue alors une référence permettant de minimiser toutes les dispersions de positionnement des guides de lumière G1 et G2 par rapport aux sources de lumière S1 et S2 qui leurs sont associées respectivement. Il en résulte des positionnements précis des sources de lumière S1 et S2 par rapport respectivement aux zones d'entrée des guides de lumière GL1 et GL2 associés, ce qui permet à ces derniers (GL1 et GL2) d'assurer correctement leurs fonctions photométriques respectives, tant sur les plans de l'intensité et de la divergence que sur le plan de l'homogénéité.

De plus, il n'y a qu'un seul mode de fixation des éléments (GL1, CC et GL2), ce qui est avantageux sur le plan économique.

On notera que dans l'exemple illustré non limitativement sur la figure 6, la face FS de la pièce de support PS comprend des premier M1 et second M2 mâts destinés à coopérer avec les premier Tj1 (k = 1) et second Tj2 (k = 2) trous de chaque groupe GTj (j = 1 à 3). Cette option est destinée à optimiser la précision et la stabilité des positionnements mentionnés dans le paragraphe précédent.

Par exemple, et comme illustré non limitativement sur les figures 2, 3, 5 et 6, les premier M1 et second M2 mâts peuvent présenter chacun une section de forme générale carrée. Dans ce cas, le premier trou Tj1 de chaque groupe GTj peut présenter une forme générale carrée homologue de la forme de la section du premier mât M1, comme illustré non limitativement sur les figures 1 et 4 à 6. Cet agencement est destiné à assurer un positionnement précis suivant les directions longitudinale X et transversale Y.

Egalement par exemple, et comme illustré non limitativement sur les figures 2, 3, 5 et 6, le second trou Tj2 de chaque groupe GTj peut présenter une forme générale rectangulaire ou oblongue adaptée à la section du second mât M2 correspondant. Par exemple, le grand côté de la forme générale de cette section est placé suivant la direction transversale Y. Cet agencement est destiné à assurer un positionnement précis suivant la direction longitudinale X en laissant un degré de liberté de positionnement suivant la direction transversale Y pour éviter les blocages par isostatisme. On notera qu'ici la forme générale du second trou Tj2 de chaque groupe GTj est rectangulaire. Mais en variante elle pourrait être oblongue.

On notera, comme illustré non limitativement sur les figures 1 à 3 et 6, que la face FS de la pièce de support PS peut comprendre autour de chaque mât Mk au moins une protubérance PR comprenant une surface d'appui SA contre laquelle s'appuie le premier guide de lumière GL1 (et plus précisément ici l'une de ses pattes de fixation PFk) lorsqu'il est dans son premier niveau prédéfini. Cette option est destinée à définir très précisément le positionnement suivant la direction verticale Z du premier guide de lumière GL1 par rapport au(x) mât(s) Mk.

Dans l'exemple illustré non limitativement, la face FS de la pièce de support PS comprend quatre protubérances PR au pied des quatre faces de chaque mât Mk, afin de bien répartir l'appui du premier guide de lumière GL1. Mais elle pourrait en comprendre moins de quatre, et par exemple deux ou trois, voire seulement une (éventuellement en boucle fermée).

On notera également, comme illustré non limitativement sur les figures 1 et 6, que le dispositif d'éclairage DE peut comprendre un premier masque MA1 intercalé entre le premier guide de lumière GL1 et la carte à circuits imprimés CC. Cela permet avantageusement d'empêcher le passage de photons parasites entre la zone contenant la seconde source S2 et le second guide de lumière GL2 et la zone contenant la première source S1 et le premier guide de lumière GL1, et donc d'isoler l'une de l'autre les première et seconde fonctions photométriques. Dans ce cas, comme illustré, le premier masque MA1 peut comprendre, d'une part, une ouverture OP placée devant la première source de lumière S1 afin que les photons qu'elle génère alimentent le premier guide de lumière GL1, et, d'autre part, un quatrième groupe GT4 d'au moins un trou T4k traversé par le mât Mk correspondant. Cette dernière caractéristique technique permet de positionner précisément suivant la direction verticale Z le premier masque MA1 par rapport au(x) mât(s) Mk et donc par rapport aux niveaux respectifs des autres éléments (GL1, CC et GL2).

Par exemple, le premier masque MA1 peut être réalisé par moulage dans une matière plastique telle que du polycarbonate (ou PC) ou du poly-méthacrylate de méthyle (ou PMMA).

En variante, au lieu d'utiliser un premier masque MA1, on pourrait utiliser une carte à circuits imprimés CC présentant des dimensions plus grandes suivant les directions longitudinale X et transversale Y.

On notera également, comme illustré non limitativement sur la figure 1, que le dispositif d'éclairage DE peut comprendre un second masque MA2 placé sous (ou avant) le premier guide de lumière GL1 (du côté opposé à la carte à circuits imprimés CC). Cela permet avantageusement d'empêcher le passage de photons parasites vers et depuis la zone située sous (ou avant) le premier guide de lumière GL1, et donc d'isoler la première fonction photométrique. Dans ce cas, comme illustré, le second masque MA2 peut comprendre un cinquième groupe d'au moins un trou traversé par le mât Mk correspondant. Cette dernière caractéristique technique permet de positionner précisément suivant la direction verticale Z le second masque MA2 par rapport au(x) mât(s) Mk et donc par rapport aux niveaux respectifs des autres éléments (GL1, MA1, CC et GL2).

Par exemple, le second masque MA2 peut être réalisé par moulage dans une matière plastique telle que du polycarbonate (ou PC) ou du poly-méthacrylate de méthyle (ou PMMA).

On notera également, comme illustré non limitativement sur les figures 1, 3 et 6, que chaque mât Mk peut comprendre un logement interne LI débouchant au niveau de son extrémité libre ELk et muni d'un filetage interne sur lequel est vissée une vis VF. Dans ce cas, la vis VF a une tête qui est plaquée contre une face du second guide de lumière GL2 qui est opposée à la carte à circuits imprimés CC. Cette option permet de solidariser fixement et étroitement le second guide de lumière GL2 au(x) mât(s) Mk, dans son troisième niveau prédéfini, tout en immobilisant précisément le premier guide de lumière GL1 et la carte à circuits imprimés CC ainsi que l'éventuel premier masque MA1 respectivement dans leurs premier, deuxième et quatrième niveaux.

On notera qu'au lieu de réaliser la solidarisation et l'immobilisation par vissage, on pourrait la réaliser par clippage.

On notera également que le dispositif d'éclairage DE pourrait assurer plus de deux fonctions photométriques prédéfinies, et par exemple trois ou quatre. Dans ce cas on utilise des mâts Mk de plus grande hauteur et l'on prévoit un ou plusieurs guides de lumière supplémentaires et une ou plusieurs autres cartes à circuits imprimés équipées de source(s) de lumière pour alimenter ces guides de lumière supplémentaires, ainsi qu'éventuellement un ou plusieurs masques intercalaires supplémentaires.

On notera également que dans les exemples illustrés non limitativement, la pièce de support PS est placée dans la position la plus inférieure, le premier guide de lumière GL1 est placé au-dessus de la pièce de support PS, la carte à circuits imprimés CC est placée dans une position intermédiaire au-dessus du premier guide de lumière GL1, et le second guide de lumière GL2 est placé dans la position la plus supérieure au-dessus de la carte à circuits imprimés CC. Mais on pourrait avoir un agencement inverse (c'est-à-dire avec la pièce de support PS placée dans la position la plus supérieure).

## Revendications

1. Dispositif d'éclairage (DE) comprenant des première (S1) et seconde (S2) sources de lumière propres à générer des photons, des premier (GL1) et second (GL2) guides de lumière propres à assurer respectivement des première et seconde fonctions photométriques prédéfinies à partir des photons générés par lesdites première (S1) et seconde (S2) sources de lumière, **caractérisé en ce que** lesdits premier (GL1) et second (GL2) guides de lumière comprennent respectivement des premier (GT1) et deuxième (GT2) groupes d'au moins un trou (Tjk), et **en ce qu'**il comprend en outre i) une carte à circuits imprimés (CC) comportant des première (F1) et seconde (F2) faces auxquelles sont respectivement solidarisées lesdites première (S1) et seconde (S2) sources de lumière et munie d'un troisième groupe (GT3) d'au moins un trou (Tjk), et ii) une pièce de support (PS) comprenant une face (FS) munie d'au moins un mât (Mk) traversant respectivement des trous (Tjk) desdits premier (GT1) et troisième (GT3) groupes, dans cet ordre, afin de positionner respectivement lesdits premier guide de lumière (GL1) et carte à circuits imprimés (CC) à des premier et deuxième niveaux prédéfinis, et comprenant une extrémité libre (ELk) coiffée par ledit second guide de lumière (GL2) au niveau d'un trou (Tjk) correspondant afin de le positionner à un troisième niveau prédéfini.

2. Dispositif selon la revendication 1, **caractérisé en ce que** chaque groupe (GT1, GT2, GT3) comprend deux trous (Tjk) et ladite face (FS) de la pièce de support (PS) comprend des premier (M1) et second (M2) mâts.

3. Dispositif selon la revendication 2, **caractérisé en ce que** lesdits premier (M1) et second (M2) mâts présentent chacun une section de forme générale carrée, et **en ce qu'**un premier trou (Tjk) de chaque groupe (GT1, GT2, GT3) présente une forme générale carrée homologue de la forme de ladite section du premier mât (M1).

4. Dispositif selon la revendication 3, **caractérisé en ce qu'**un second trou (Tjk) de chaque groupe (GT1, GT2, GT3) présente une forme générale rectangulaire ou oblongue adaptée à ladite forme de la section du second mât (M2) correspondant.

5. Dispositif selon l'une des revendications 1 à 4, **caractérisé en ce que** ladite face (FS) de la pièce de support (PS) comprend autour de chaque mât (Mk) au moins une protubérance (PR) comprenant une surface d'appui (SA) contre laquelle s'appuie ledit premier guide de lumière (GL1) lorsqu'il est dans son premier niveau prédéfini.

6. Dispositif selon l'une des revendications 1 à 5, **caractérisé en ce qu'**il comprend un premier masque (MA1) intercalé entre ledit premier guide de lumière (GL1) et ladite carte à circuits imprimés (CC) afin d'isoler l'une de l'autre lesdites première et seconde fonctions photométriques, et comprenant i) une ouverture (OP) placée devant ladite première source de lumière (S1) afin que les photons générés par cette dernière (S1) alimentent ledit premier guide de lumière (GL1), et ii) un quatrième groupe (GT4) d'au moins un trou (Tjk) traversé par ledit mât (Mk) correspondant.

7. Dispositif selon l'une des revendications 1 à 6, **caractérisé en ce que** chaque mât (Mk) comprend un logement interne (LI) débouchant au niveau de son extrémité libre (ELk) et muni d'un filetage interne sur lequel est vissée une vis (VF) ayant une tête plaquée contre une face dudit second guide de lumière (GL2), opposée à ladite carte à circuits imprimés (CC).

8. Dispositif selon l'une des revendications 1 à 7, **caractérisé en ce que** lesdites première et seconde fonctions photométriques sont choisies parmi une fonction d'indicateur de changement de direction, une fonction de feu de stop, une fonction de feu de jour, et une fonction de feu de position.

9. Bloc optique (BO) de véhicule, **caractérisé en ce qu'**il comprend au moins un dispositif d'éclairage (DE) selon l'une des revendications précédentes.

10. Véhicule, **caractérisé en ce qu'**il comprend au moins un bloc optique (BO) selon la revendication 9 et/ou au moins un dispositif d'éclairage (DE) selon l'une des revendications 1 à 8.

## Patentansprüche

1. Beleuchtungsvorrichtung (DE), die eine erste (S1) und eine zweite (S2) Lichtquelle umfasst, die geeignet sind, Photonen zu erzeugen, einen ersten (GL1) und einen zweiten (GL2) Lichtwellenleiter, die geeignet sind, jeweils eine erste und eine zweite vordefinierte fotometrische Funktion ausgehend von den Photonen, die von der ersten (S1) und der zweiten (S2) Lichtquelle erzeugt werden, sicherzustellen, **dadurch gekennzeichnet, dass** der erste (GL1) und der zweite (GL2) Lichtwellenleiter jeweils eine erste (GT1) und eine zweite (GT2) Gruppe mit mindestens einem Loch (Tjk) umfassen, und dass sie außerdem i) eine Leiterplatte (CC) umfasst, die eine erste (F1) und eine zweite (F2) Fläche umfasst, an welchen jeweils die erste (S1) und die zweite (S2) Lichtquelle fest verbunden sind, und die mit einer dritten Gruppe (GT3) mit mindestens einem Loch (Tjk) versehen ist, wobei ein Tragteil (PS) eine Fläche (FS) umfasst, die mit mindestens einem Mast (Mk) versehen ist, der jeweils Löcher (TjK) der ersten (GT1) und der dritten (GT3) Gruppe in dieser Reihenfolge durchquert, um jeweils den ersten Lichtwellenleiter (GL1) und die Leiterplatte (CC) an einem ersten und einem zweiten vordefinierten Niveau zu positionieren, und ein freies Ende (ELk) umfasst, auf dem der zweite Lichtwellenleiter (GL2) im Bereich eines entsprechenden Lochs (Tjk) sitzt, um ihn an einem dritten vordefinierten Niveau zu positionieren.

2. Vorrichtung nach Anspruch 1, **dadurch gekennzeichnet, dass** jede Gruppe (GT1, GT2, GT3) zwei Löcher (Tjk) umfasst, und die Fläche (FS) des Tragteils (PS) einen ersten (M1) und einen zweiten (M2) Mast umfasst.

3. Vorrichtung nach Anspruch 2, **dadurch gekennzeichnet, dass** der erste (M1) und der zweite (M2) Mast jeweils einen Querschnitt mit im Allgemeinen quadratischer Form aufweisen, und dass ein erstes Loch (Tjk) jeder Gruppe (GT1, GT2, GT3) eine allgemeine quadratische Form homolog zu der Form des Querschnitts des ersten Masts (M1) aufweist.

4. Vorrichtung nach Anspruch 3, **dadurch gekennzeichnet, dass** ein zweites Loch (Tjk) jeder Gruppe (GT1, GT2, GT3) eine allgemeine rechteckige oder längliche Form aufweist, die an die Form des Querschnitts des entsprechenden Masts (M2) angepasst ist.

5. Vorrichtung nach einem der Ansprüche 1 bis 4, **dadurch gekennzeichnet, dass** die Fläche (FS) des Tragteils (PS) um jeden Mast (Mk) mindestens einen Vorsprung (PR) umfasst, der eine Auflageoberfläche (SA) umfasst, gegen die der erste Lichtwellenleiter (GL1) anliegt, wenn er in seinem ersten vordefinierten Niveau ist.

6. Vorrichtung nach einem der Ansprüche 1 bis 5, **dadurch gekennzeichnet, dass** sie eine erste Maske (MA1) umfasst, die zwischen dem ersten Lichtwellenleiter (GL1) und der Leiterplatte (CC) eingefügt ist, um die erste und die zweite fotometrische Funktion voneinander zu isolieren, und i) eine Öffnung (OP) umfasst, die vor der ersten Lichtquelle (S1) platziert ist, damit die Photonen, die von dieser Letzteren (S1) erzeugt werden, den ersten Lichtwellenleiter (GL1) versorgen, und ii) eine vierte Gruppe (GT4) mit mindestens einem Loch (Tjk), das von dem entsprechenden Mast (Mk) durchquert ist.

7. Vorrichtung nach einem der Ansprüche 1 bis 6, **dadurch gekennzeichnet, dass** jeder Mast (Mk) eine Innenaufnahme (LI) umfasst, die in dem Bereich ihres freien Endes (ELk) mündet und mit einem Innengewinde versehen ist, auf das eine Schraube (VF) geschraubt ist, die einen Kopf aufweist, der gegen eine Fläche des zweiten Lichtwellenleiters (GL2), der Leiterplatte (CC) entgegengesetzt, angedrückt ist.

8. Vorrichtung nach einem der Ansprüche 1 bis 7, **dadurch gekennzeichnet, dass** die erste und die zweite fotometrische Funktion aus einer Richtungsänderungsangabefunktion, einer Bremsleuchtenfunktion, einer Tagfahrleuchtenfunktion und einer Standlichtfunktion ausgewählt sind.

9. Scheinwerfereinsatz (BO) eines Fahrzeugs, **dadurch gekennzeichnet, dass** er mindestens eine Beleuchtungsvorrichtung (DE) nach einem der vorstehenden Ansprüche umfasst.

10. Fahrzeug, **dadurch gekennzeichnet, dass** es mindestens einen Scheinwerfersatz (BO) nach Anspruch 9 und/oder mindestens eine Beleuchtungsvorrichtung (DE) nach einem der Ansprüche 1 bis 8 umfasst.

## Claims

1. A lighting device (DE) including first (S1) and second (S2) light sources suitable for generating photons, first (GL1) and second (GL2) light guides suitable for ensuring respectively first and second predefined photometric functions from photons generated by said first (S1) and second (S2) light sources, **characterized in that** said first (GL1) and second (GL2) light guides include respectively first (GT1) and second (GT2) groups of at least one hole (Tjk), and **in that** it further includes i) a printed circuit board (CC) comprising first (F1) and second (F2) faces to which said first (S1) and second (S2) light sources are respectively secured, and provided with a third group (GT3) of at least one hole (Tjk), and ii) a support part (PS) including a face (FS) provided with at least one rod (Mk) passing respectively through holes (Tjk) of said first (GT1) and third (GT3) groups, in this order, so as to position respectively said first light guide (GL1) and printed circuit board (CC) at first and second predefined levels, and including a free end (ELk) capped by said second light guide (GL2) at the level of a corresponding hole (Tjk) so as to position it at a third predefined level.

2. The device according to claim 1, **characterized in that** each group (GT1, GT2, GT3) includes two holes (Tjk) and said face (FS) of the support part (PS) includes first (M1) and second (M2) rods.

3. The device according to claim 2, **characterized in that** said first (M1) and second (M2) rods each have a section of general square shape, and **in that** a first hole (Tjk) of each group (GT1, GT2, GT3) has a general square shape homologous to the shape of said section of the first rod (M1).

4. The device according to claim 3, **characterized in that** a second hole (Tjk) of each group (GT1, GT2, GT3) has a general rectangular or oblong shape adapted to said shape of the section of the corresponding second rod (M2) .

5. The device according to one of claims 1 to 4, **characterized in that** said face (FS) of the support part (PS) includes around each rod (Mk) at least one protuberance (PR) including a support surface (SA) against which said first light guide (GL1) rests when it is in its first predefined level.

6. The device according to one of claims 1 to 5, **characterized in that** it includes a first mask (MA1) inserted between said first light guide (GL1) and said printed circuit board (CC) so as to isolate one of the other of said first and second photometric functions, and including i) an opening (OP) placed in front of said first light source (S1) so that the photons generated by the latter (S1) supply said first light guide (GL1), and ii) a fourth group (GT4) of at least one hole (Tjk) passed through by said corresponding rod (Mk).

7. The device according to one of claims 1 to 6, **characterized in that** each rod (Mk) includes an internal housing (LI) opening out at the level of its free end (ELk) and provided with an internal thread on which a screw (VF) is screwed, having a head pressed against a face of said second light guide (GL2), opposed to said printed circuit board (CC).

8. The device according to one of claims 1 to 7, **characterized in that** said first and second photometric functions are selected from a change of direction indicator function, a stop light function, a daytime running light function, and a position light function.

9. An optical unit (BO) of a vehicle, **characterized in that** it includes at least one lighting device (DE) according to one of the preceding claims.

10. A vehicle, **characterized in that** it includes at least one optical unit (BO) according to claim 9 and/or at least one lighting device (DE) according to one of claims 1 to 8.
